# FASCICULE DE BREVET EUROPEEN

(11) **EP 0 636 676 B1**
(45) Date de publication et mention de la délivrance du brevet: **07.10.1998**
(21) Numéro de dépôt: 94401689.8
(22) Date de dépôt: 21.07.1994
(51) Int. Cl.: C10G 45/60, B01J 37/20

(54) **Procédé d'isomérisation d'oléfines sur des catalyseurs métalliques imprégnés de composes organiques soufrés avant chargement dans le réacteur**
Verfahren zur Isomerierung von Olefinen in Anwesenheit von metallischen Katalysatoren, impregniert mit organischen Schwefelzusammensetzungen vor dem Einbringen in den Reaktor
Process for the isomerization of olefins on metallic catalysts, impregnated with organic sulfur compounds before loading into the reactor

(30) Priorité: 30.07.1993 FR 9309528
(43) Date de publication de la demande: 01.02.1995
(73) Titulaire: INSTITUT FRANCAIS DU PETROLE, 92502 Rueil-Malmaison (FR)
(72) Inventeur: Cameron, Charles, F-75005 Paris (FR); Nocca, Jean-Luc, Houston (US); Sarrazin, Patrick, F-92500 Rueil Malmaison (FR); Forestiere, Alain, F-69390 Vernaison (FR)

(56) Documents cités:
- FR-A- 2 627 104
- US-A- 3 290 404
- US-A- 4 724 274

## Description

La présente invention concerne un procédé d'isomérisation des oléfines, avec plus précisément isomérisation des oléfines externes en oléfines internes et/ou avec isomérisation des oléfines peu substituées en oléfines externes plus substituées, dans les coupes d'hydrocarbures liquides comme, par exemple, les coupes C₄, C₅ et C₆ de vapocraquage, de craquage catalytique ou d'oligomérisation préalablement débarrassées de la plus grande partie des composés dioléfiniques qu'elles contienne éventuellement, par exemple par hydrogénation sélective. En effet, il est parfois avantageux d'isomériser les oléfines externes en oléfines internes qui peuvent présenter plus d'intérêt pour les procédés qui vont les utiliser en aval comme, par exemple, les unités d'alkylation ou d'étherification. On peut citer à titre d'exemple l'isomérisation de méthyl-4-pentène-1 (oléfine externe peu substituée) en méthyl-2-pentène-1 (oléfine externe plus substituée) et en méthyl-2-pentène-2 (oléfine interne) et l'isomérisation de méthyl-4-pentène-2 (oléfine interne) en méthyl-2-pentène-2 (oléfine interne) et en méthyl-2-pentène-1.

De tels traitements sont effectués sur des catalyseurs à base d'au moins un métal du groupe VIII déposé sur support amorphe ou cristallin.

Lorsque les charges à traiter ne contiennent pas ou peu de dioléfines une difficulté supplémentaire apparaît. En effet, il est difficile d'obtenir une isomérisation des oléfines externes en oléfines internes et/ou des oléfines internes en autres oléfines internes proche de l'équilibre thermodynamique tout en limitant l'hydrogénation des oléfines en paraffines.

L'hydrogénation sélective des n-oléfines a pu être contrôlée par exemple dans le brevet US 4,724,274 par addition de soufre dans la charge.

Dans ce brevet, il est décrit un procédé de préparation de méthyl-2-butène-2 (oléfine interne) à partir d'une charge C₅ contenant le méthyl-2-butène-1 (oléfine externe) et au moins un n-pentène, avec un catalyseur à base d'un métal du groupe VIII et en présence d'un composé soufré dans la charge (H2S, thiol, thiophène...) à raison de 2 à 50 ppm. Les oléfines linéaires sont sélectivement hydrogénées et il se produit également une isomérisation du butène-1 en butène-2. En l'absence de soufre dans la charge, on constate une hydrogénation également des isopentènes qui réduit le rendement en produits recherchés.

L'objet de la présente invention est de réduire encore l'hydrogénation et de favoriser l'isomérisation en sélectivant le catalyseur de manière appropriée avant son chargement dans le réacteur de l'unité.
Plus précisèment , la présente invention est un procédé d'isomérisation des oléfines externes contenues dans une charge en oléfines externes plus substituées et/ou en oléfines internes, ladite charge liquide ne contenant pratiquement pas de dioléfines, en présence d'un catalyseur à base de palladium et en présence d'hydrogène, les conditions d'isomérisation du procédé correspondant à des températures comprises entre 20 et 200 °C, des pressions entre 1 et 50 bars, des VVH entre 0,5 et 10 h⁻¹ et le rapport molaire H₂/oléfines compris entre 0,01 et 1, procédé dans lequel le catalyseur a été traité, avant son chargement dans le réacteur d'isomérisation, par au moins un composé soufré dilué dans un solvant, et que le catalyseur obtenu contenant 0,05 à 10 % de soufre (en poids) est chargé dans le réacteur et activé sous atmosphère neutre ou réductrice à une température comprise entre 20 et 300 °C, une pression comprise entre 1 et 50 bars et une VVH comprise entre 50 et 600 h⁻¹, et que la charge est mise au contact dudit catalyseur activé dans les conditions d'isomérisation.

Il a été en effet trouvé que, de façon surprenante, l'introduction de composés organiques contenant du soufre permet, malgré une manipulation à l'air intermédiaire, une amélioration de l'activité isomérisante du catalyseur. Les composés utilisés peuvent être, sans que cela limite la validité de l'invention à ces seuls composés, des composés sulfurés et notamment des composés sulfurés organiques décomposables dans les traitements d'activation du catalyseur dans le réacteur. Ces activations sont faites sous atmosphères neutres ou réductrices à des températures comprises entre 20 et 300 °C et de préférence entre 60 et 210 °C, des pressions comprises entres 1 et 50 bars, et de préférence 3 à 20 bars, des VVH comprises entre 50 et 600 h⁻¹ et de préférence 100 à 200 h⁻¹ (VVH = volume m3 horaire de charge par m³ de catalyseur).

Les composés organiques soufrés utilisables dans la présente invention sont en particulier les sulfures alkyles ou aryles organiques ou les sulfures alkylaryle ou arylalkyle organiques. On citera à titre d'exemples le butyléthylsulfure, le diallylsulfure, le dibutylsulfure, le dipropylsulfure, le thiophène, le diméthylthiophène et l'éthylthiophène.

On peut utiliser de façon plus générale les thiols (thioalcools, mercaptans, thiophénols) de formule R₁-SH où R₁ est un radical organique, les thioéthers de formule R₁-S-R₂, où R₁ et R₂ sont identiques ou différents, les disulfures organiques de formule R₁-S-S-R₂ et des disulfures du type HO-R₁-S-S-R₂-OH pris séparément ou en combinaison.

On peut également choisir un agent sulfuré organique choisi dans le groupe constitué par les thiodiazoles, les thioacides organiques, les thioamides, les thioesters, les thiophénols. On citera à titre d'exemple l'acide thiobenzoique, les thiocrésols, l'acide 3,3 thiodipropionitrile, le 2,3,6 triméthylthiophénol, le méthyl thioglycollate, le naphtalène 2-thiol, le phényl isothiocyanate, le 2 phényl thiophénol, le thioacétamide, le thiobenzamide, le 2,6 diméthyl thiophénol, le 3,5 diméthylthiophénol, le 2,2' dinitrodiphényl disulfure, la 2,5 dithiobiurée, l'éthyl thioglycollate, le 2-méthoxy thiophénol, le 3-méthoxy thiophénol.

L'invention peut être effectuée également en présence d'autres types d'additifs soufrés. On pourra ainsi citer les mercapto-alcools de formule : 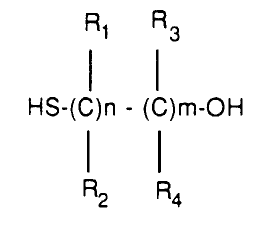 où n et m sont des nombres entiers, R₁, R₂, R₃, R₄, identiques ou différents sont des atomes d'hydrogène ou des radicaux organiques alkyle, aryle, aralkyle etc... ayant de 1 à 20 ; de préférence de 1 à 6 atomes de carbone par molécule ; de préférence n = 1-10 (exemple 1-2) et m = 1-10 (exemple 1).

On peut citer également les monothioglycols tel que le monothioéthylèneglycol, les dithioglycols tel que le dithiopropylène glycol, les dithiobenzènes tel que la dithiorésorcine, les hétérocycles substitués par des groupes mercapto tels que la mercaptopyridine, la mercaptopyrimidine etc..., les dihydroxyalkyle sulfures tel que le thiodiéthylène glycol (S(CH₂CH₂OH)₂), le thiodipropylène glycol etc..., les diaryl sulfures tel que le diphényl sulfure, les diaralkyl sulfures tel que le dibenzylsulfure, les thioéthers cycliques et leurs dérivés substitués (éthylène sulfure, thiophène, thiazole, thiopyrone, thioxanthone, thioxanthydrol, 1,4 thioxane etc...), les S alkyle éthers de hétérocycles substitués par des mercaptans (2- méthylthio 4,6 diamino pyrimidine etc...).

Parmi les familles des composés précédents, on citera plus particulièrement le diméthylsulfoxyde, l'éthylthiol éthanol, l'acide thio glycolique, le dithioglycol et les disulfures organiques de formule notamment HO-R₁-S-S-R₂-OH comme indique plus haut ou HO-(CH₂)ₓ-S-(CH₂)_{x'}-S-(CH₂)_{x''}-OH où R₁ et R₂ sont définis comme précédemment, où x, x', x'', identiques ou différents sont un nombre entier.

On peut citer plus particulièrement à titre d'exemple le diéthanol disulfure ou 2,2 dithio bis éthanol (D.E.O.D.S.) de formule HO-C₂H₄-S-S-C₂H₄-OH soluble notamment dans l'eau, les glycols et les polyglycols.

On peut également utiliser un polysulfure de formule R-Sn-R' où n est un nombre entier de 3 à 20 atomes de préférence de 4 à 8 et plus particulièrement de 5 à 7, R et R', identiques ou différents, représentent des radicaux organiques renfermant chacun 1 à 150 atomes des carbone par molécule, de préférence soit 10 à 60 atomes carbone soit 5 à 40 atomes de carbone et plus particulièrement 7 à 16, ces radicaux étant choisis dans le groupe constitué par les radicaux alkyles, c'est-à-dire saturés ou insaturés, linéaires ou ramifiés ou de type naphténique, les radicaux aryles, les radicaux alkylaryles et les radicaux arylalkyles, ces divers radicaux pouvant comporter au moins un hétéroatome. R' éventuellement peut également être un atome d'hydrogène.

On peut citer, à titre d'exemple préféré de polysulfure, le ditertiododécylpolysulfure (n = 5) où R et R' sont chacun un radical tertio-dodécyle.

Ce produit est commercialisé par exemple par ELF AQUITAINE sous le nom de TPS 32 notamment parce qu'il contient 32 % poids de soufre. On peut citer également le ditertiononylpolysulfure (n = 5) où R et R' sont chacun un radical tertio-nonyle.

L'agent de prétraitement est utilisé, dilué dans un solvant adéquat qui dépend notamment de la nature de l'agent de sulfuration. Le solvant choisi peut être un des solvants suivants utilisés seuls ou en mélange :
- une essence légère bouillant par exemple entre environ 60 et 95 °C,
- une essence de type hexane bouillant entre 63 et 68 °C environ,
- une essence de type F bouillant entre environ 100 et 160 °C et contenant généralement 10 à 20 % d'hydrocarbures aromatiques, par exemple 15 %, en volume,
- une essence de type "White spirit" bouillant entre environ 150 et 250 °C et renfermant généralement 14 à 22 % d'hydrocarbures aromatiques, par exemple 17 % en volume,
- ou toute coupe hydrocarbonée ou non, équivalente aux essences précédentes.

L'agent peut être utilisé dans un autre solvant tel que, par exemple, les alcools (méthanol, éthanol, propanol, etc...), les aldéhydes, les cétones, les éthers, les esters, polyalcools, acides et polyacides, les glycols. Ces composés peuvent également jouer le rôle de réducteur. Un autre solvant possible est l'eau.

Après avoir été imprégné, le catalyseur est avantageusement soumis à un traitement thermique, généralement entre 100 et 200°C.

Dans la présente invention on incorporera avantageusement dans le catalyseur 0,05 % à 10 % et de préférence 0,2 % à 1 % de soufre exprimé en poids de soufre par rapport à la masse de catalyseur.

Le catalyseur contient également généralement 0,02 à 2% poids de palladium, de préférence 0,05 à 1%, et avantageusement 0,05 à 0,5%.

Le catalyseur présulfuré ainsi obtenu est ensuite activé dans le réacteur avant introduction de la charge. La réaction d'isomérisation a lieu à une pression comprise entre 1 et 50 bars (5 à 30 bars préféré), une température entre 20 et 200 °C (50 à 150 °C préféré) et une VVH comprise entre 0,5 et 10 h⁻¹ (1 à 6 h⁻¹ préféré), le rapport H₂/oléfines (molaire) étant compris entre 0,01 et 1 (et de préférence 0,02 à 0,2).

Un composé soufré (tel que défini précédemment) peut également être introduit en plus dans la charge.

Les exemples suivants illustrent l'invention sans en limiter l'application.

### EXEMPLE 1 : (comparaison)

On dispose de 100 cm³ de catalyseur LD 265 de la Société Procatalyse (noté catalyseur A ci-après) contenant 0,3 % poids de palladium supporté sur alumine dans un tube d'acier de 3 cm de diamètre. Ce catalyseur utilisé couramment pour l'hydrogénation sélective des coupes de vapocraquage ou de FCC est activé selon le mode opératoire suivant :
- Réduction sous hydrogène à un débit de 30 l/h pendant 5 heures à 200°C.

On refroidit ensuite le catalyseur sous débit d'hydrogène puis on purge l'installation à l'azote.

On mesure ensuite l'activité isomérisante et hydrogénante du catalyseur avec une charge hydrocarbonée dont la composition en pourcent masse est présentée dans le tableau 1. Pour cela, cette charge est passée en flux ascendant avec de l'hydrogène à travers le lit de catalyseur dans les conditions présentées dans le tableau 1.

Les effluents du réacteur sont analysés par chromatographie en phase vapeur à l'aide d'une colonne capillaire PONA de 50 m. Les résultats obtenus sont présentés dans la colonne notée "Exemple 1" du tableau 1 suivant :

L'invention a également pour avantage de permettre la sulfuration dans des unités spécialisées destinées seulement à cette réaction et d'éviter la contamination du réacteur d'isomérisation (et des appareils en aval) par le soufre.

Un autre avantage est pour l'exploitant de pouvoir remettre à l'air le catalyseur présulfuré afin de le charger en réacteur. Cette mise à l'air possible facilite notablement le conditionnement et le transport de ce catalyseur.

**Tableau 1**

| | **Charge** | **Exemple 1** | **Exemple 2** | **Exemple 3** | **Exemple 4** | **Exemple 5** | **Exemple 6** |
|---|---|---|---|---|---|---|---|
| Méthyl-4-pentène-1 | 0.89 | 0.38 | 0.73 | 0.70 | 0.64 | 0.77 | 0.93 |
| Méthyl-4-pentène-2 cis | 2.97 | 2.69 | 2.62 | 2.55 | 1.75 | 2.09 | 2.51 |
| Méthyl-4-pentène-2 trans | 18.14 | 15.86 | 15.64 | 15.32 | 9.02 | 10.97 | 13.31 |
| Méthyl-2-pentène-2 | 42.00 | 42.59 | 43.38 | 43.69 | 45.05 | 44.51 | 43.36 |
| Méthyl-2-pentène-1 | 5.92 | 3.73 | 6.55 | 6.60 | 9.13 | 8.81 | 8.20 |
| Méthyl-2-pentane | 0.08 | 4.73 | 1.05 | 1.08 | 4.32 | 2.80 | 1.63 |
| Diméthyl-2,3-butène-1 | 1.97 | 1.79 | 1.62 | 1.58 | 1.16 | 1.31 | 1.48 |
| Diméthyl-2,3-butène-2 | 5.41 | 5.39 | 5.71 | 5.76 | 6.08 | 6.02 | 5.85 |
| Diméthyl-2,3-butane | 0.04 | 0.24 | 0.06 | 0.06 | 0.14 | 0.10 | 0.07 |
| Hexènes 1 & 3 (cis & trans) | 5.62 | 2.05 | 5.56 | 5.56 | 4.90 | 5.38 | 5.75 |
| Hexène-2 trans | 13.17 | 11.71 | 12.27 | 12.27 | 9.51 | 10.44 | 11.24 |
| Hexène-2 cis | 3.81 | 3.78 | 3.76 | 3.72 | 3.40 | 3.65 | 3.96 |
| Héxane | 0.00 | 5.05 | 1.06 | 1.11 | 4.89 | 3.14 | 1.71 |
| Somme Alcanes | 0.12 | 10.02 | 2.17 | 2.25 | 9.35 | 6.04 | 3.41 |
| Total oléfines non recherchées (1) | 22.0 | 18.93 | 18.99 | 18.57 | 11.41 | 13.83 | 16.75 |
| Total produits non recherchés (2) | 22.12 | 28.95 | 21.16 | 20.82 | 20.76 | 19.87 | 20.16 |
| Total oléfines recherchées (3) | 47.92 | 46.32 | 49.93 | 50.29 | 54.18 | 53.32 | 51.56 |
| Vitesse spatiale (h-1) | | 2 | 2 | 2 | 2 | 2 | 2 |
| P (bar) | | 20 | 20 | 20 | 20 | 20 | 20 |
| T (°C) | | 70 | 70 | 70 | 120 | 120 | 120 |
| Rapport molaire H2/oléfines | | 0.1 | 0.1 | 0.2 | 0.2 | 0.1 | 0.1 |
| DMDS (ppm)* | 0 | 0 | 0 | 0 | 0 | 0 | 200 |

| | | | | | | | |
|---|---|---|---|---|---|---|---|
| (1) : méthyl-4 pentène-1 + méthyl-4 pentène-2 (cis + trans) | | | | | | | |
| (2) : méthyl-4 pentène-1 + méthyl-4 pentène-2 (cis + trans) + alcanes | | | | | | | |
| (3) : méthyl-2 pentène-2 + méthyl-2 pentène-1 | | | | | | | |
| * : DMDS = Diméthyldisulfure | | | | | | | |

### EXEMPLE 2 à 6 : (selon l'invention)

On dispose de 100 cm³ de catalyseur LD 265 de la Société Procatalyse contenant 0,3 % poids de palladium supporté sur alumine. On imprègne à sec ce catalyseur avec une solution aqueuse d'acide formique à 2.2 mole par litre et de diéthoxydisulfure à 0.15 mole par litre. On sèche le catalyseur imprégné pendant 6 heures à 120°C. Ce catalyseur est appelé catalyseur B. On le dispose dans un tube d'acier de 3 cm de diamètre et on l'active selon le mode opératoire suivant :
- Réduction sous hydrogène à un débit de 30 l/h pendant 5 heures à 200°C.

On refroidit ensuite le catalyseur sous débit d'hydrogène puis on purge l'installation à l'azote.

On mesure ensuite l'activité isomérisante et hydrogénante du catalyseur avec une charge hydrocarbonée dont la composition est présentée dans le tableau 1. Pour cela, cette charge est passée en flux ascendant avec de l'hydrogène à travers le lit de catalyseur dans les conditions opératoires décrites dans le tableau 1.

Les effluents du réacteur sont analysés par chromatographie en phase vapeur à l'aide d'une colonne capillaire PONA de 50 m. Les résultats obtenus selon les conditions opératoires sont présentés dans les colonnes notées "Exemple 2 à Exemple 6" du tableau 1 de l'exemple 1. On voit clairement que selon l'invention la quantité d'oléfines du type méthyl-2-pentènes (oléfines hautement recherchées) est plus élevée alors que la proportion d'alcanes et d'oléfines non recherchées est diminuée par rapport aux résultats de l'exemple 1.

L'invention a également pour avantage de permettre la sulfuration dans des unités spécialisées destinées seulement à cette réaction et d'éviter la contamination du réacteur d'isomérisation (et des appareils en aval) par le soufre.

Un autre avantage est pour l'exploitant de pouvoir remettre à l'air le catalyseur présulfuré afin de le charger en réacteur. Cette mise à l'air possible facilite notablement le conditionnement et le transport de ce catalyseur.

## Revendications

1. Procédé d'isomérisation des oléfines externes contenues dans une charge en oléfines externes plus substituées et/ou en oléfines internes, ladite charge liquide ne contenant pratiquement pas de dioléfines, en présence d'un catalyseur à base de palladium et en présence d'hydrogène, les conditions d'isomérisation du procédé correspondant à des températures comprises entre 20 et 200 °C, des pressions entre 1 et 50 bars, des VVH entre 0,5 et 10 h⁻¹ et le rapport molaire H₂/oléfines compris entre 0,01 et 1, procédé caractérisé en ce que le catalyseur a été traité, avant son chargement dans le réacteur d'isomérisation, par au moins un composé soufré dilué dans un solvant, et que le catalyseur obtenu contenant 0,05 à 10 % de soufre (en poids) est chargé dans le réacteur et activé sous atmosphère neutre ou réductrice à une température comprise entre 20 et 300 °C, une pression comprise entre 1 et 50 bars et une VVH comprise entre 50 et 600 h⁻¹, et que la charge est mise au contact dudit catalyseur activé dans les conditions d'isomérisation.

2. Procédé selon la revendication 1, caractérisé en ce que la charge est choisie dans le groupe formé par les coupes C₅, C₆ de vapocraquage, de craquage catalytique et d'oligomérisation.

3. Procédé selon l'une des revendications précédentes, caractérisé en ce que le catalyseur est constitué par du palladium déposé sur de l'alumine.

4. Procédé selon l'une des revendications précédentes, caractérisé en ce que le composé soufré est choisi dans le groupe constitué par les sulfures alkyles ou aryles organiques, les sulfures alkylaryles ou arylalkyles organiques, les thiols, les thiodiazoles, les thioacides organiques, les thioamides, les thioesters, les thiophénols, les mercapto-alcools, les monothiolglycols.

5. Procédé selon l'une des revendications précédentes, caractérisé en ce que le solvant est choisi dans le groupe formé par les essences et les coupes hydrocarbonnées.

6. Procédé selon l'une des revendications précédentes, caractérisé en ce que le solvant est choisi dans le groupe formé par les alcools, aldéhydes, les cétones, les éthers, les esters, les polyalcools, les acides, les polyacides, les glycols.

7. Procédé selon l'une des revendications précédentes, caractérisé en ce que le solvant est l'eau.

8. Procédé selon l'une des revendications précédentes, caractérisé en ce que l'activation est conduite entre 60 et 210 °C, à une pression de 3 à 20 bars et une VVH de 100 à 200 h⁻¹.

9. Procédé selon l'une des revendications précédentes, caractérisé en ce que l'isomérisation est conduite entre 50 et 150 °C, à une pression de 5 à 30 bars, une VVH de 1 à 6 h⁻¹, et un rapport H₂/oléfines (molaire) de 0,02 à 0,2.

10. Procédé selon l'une des revendications précédentes, caractérisé en ce qu'un composé soufré est introduit également dans la charge.

11. Procédé selon l'une des revendications précédentes, caractérisé en ce que le catalyseur renferme 0,2 à 1 % de soufre (en poids).

12. Procédé selon l'une des revendications précédentes, caractérisé en ce que le catalyseur renferme 0,02 à 2% poids de palladium.

13. Procédé selon l'une des revendications précédentes, caractérisé en ce que le catalyseur renferme 0,05 à 1% poids de palladium.

14. Procédé selon l'une des revendications précédentes, caractérisé en ce que le catalyseur renferme 0,05 à 0,5% poids de palladium.

## Patentansprüche

1. Verfahren zur Isomerisierung von externen Olefinen, die in einer Beschickung aus stärker substituierten externen Olefinen und/oder aus internen Olefinen enthalten sind, wobei die genannte flüssige Beschickung praktisch keine Diolefine enthält, in Gegenwart eines Katalysators auf Basis von Palladium und in Gegenwart von Wasserstoff, wobei die Isomerisierungs-Bedingungen des Verfahrens Temperaturen zwischen 20 und 200°C, Drucken zwischen 1 und 50 bar, Raumgeschwindigkeiten (VVH) zwischen 0,5 und 10 h⁻¹ entsprechen und das Molverhältnis H₂/Olefine zwischen 0,01 und 1 liegt, dadurch gekennzeichnet, daß der Katalysator vor seiner Einführung in den Isomerisierungs-Reaktor mit mindestens einer schwefelhaltigen Verbindung, verdünnt in einem Lösungsmittel, behandelt worden ist und der erhaltene Katalysator, der 0,05 bis 10 Gew.-% Schwefel enthält, in den Reaktor eingeführt und unter einer neutralen oder reduzierenden Atmosphäre bei einer Temperatur zwischen 20 und 300°C, einem Druck zwischen 1 und 50 bar und einer Raumgeschwindigkeiten VVH zwischen 50 und 600 h⁻¹ aktiviert wird und daß die Beschickung mit dem genannten aktivierten Katalysator unter den Isomerisierungs-Bedingungen in Kontakt gebracht wird.

2. Verfahren nach Anspruch 1, dadurch gekennzeichnet, daß die Beschikkung ausgewählt wird aus der Gruppe, die umfaßt C₅, C₆-Fraktionen aus der Wasserdampfcrackung, der katalytischen Crackung und der Oligomerisation.

3. Verfahren nach einem der vorhergehenden Ansprüche, dadurch gekennzeichnet, daß der Katalysator aus Palladium besteht, das auf Aluminiumoxid abgeschieden ist.

4. Verfahren nach einem der vorhergehenden Ansprüche, dadurch gekennzeichnet, daß die schwefelhaltige Verbindung ausgewählt wird aus der Gruppe, die umfaßt organische Alkyl- oder Arylsulfide, organische Alkylaryl- oder Arylalkyl-Sulfide, Thiole, Thiodiazole, organische Thiosäuren, Thioamide, Thioester, Thiophenole, Mercaptoalkohole und Monothiolglycole.

5. Verfahren nach einem der vorhergehenden Ansprüche, dadurch gekennzeichnet, daß das Lösungsmittel ausgewählt wird aus der Gruppe, die umfaßt Benzine und Kohlenwasserstoff-Fraktionen.

6. Verfahren nach einem der vorhergehenden Ansprüche, dadurch gekennzeichnet, daß das Lösungsmittel ausgewählt wird aus der Gruppe, die umfaßt Alkohole, Aldehyde, Ketone, Ether, Ester, Polyalkohole, Säuren, Polysäuren und Glycole.

7. Verfahren nach einem der vorhergehenden Ansprüche, dadurch gekennzeichnet, daß das Lösungsmittel Wasser ist.

8. Verfahren nach einem der vorhergehenden Ansprüche, dadurch gekennzeichnet, daß die Aktivierung zwischen 60 und 210°C bei einem Druck von 3 bis 20 bar und einer Raumgeschwindigkeit VVH von 100 bis 200 h⁻¹ durchgeführt wird.

9. Verfahren nach einem der vorhergehenden Ansprüche, dadurch gekennzeichnet, daß die Isomerierung bei einer Temperatur zwischen 50 und 150°C, bei einem Druck von 5 bis 30 bar, bei einer Raumgeschwindigkeit VVH von 1 bis 6 h⁻¹ und einem Molverhältnis H₂/Olefine von 0,02 bis 0,2 durchgeführt wird.

10. Verfahren nach einem der vorhergehenden Ansprüche, dadurch gekennzeichnet, daß außerdem eine schwefelhaltige Verbindung in die Beschikkung eingeführt wird.

11. Verfahren nach einem der vorhergehenden Ansprüche, dadurch gekennzeichnet, daß der Katalysator 0,2 bis 1 Gew.-% Schwefel enthält.

12. Verfahren nach einem der vorhergehenden Ansprüche, dadurch gekennzeichnet, daß der Katalysator 0,02 bis 2 Gew.-% Palladium enthält.

13. Verfahren nach einem der vorhergehenden Ansprüche, dadurch gekennzeichnet, daß der Katalysator 0,05 bis 1 Gew.-% Palladium enthält.

14. Verfahren nach einem der vorhergehenden Ansprüche, dadurch gekennzeichnet, daß der Katalysator 0,05 bis 0,5 Gew.-% Palladium enthält.

## Claims

1. Process for the isomerisation of external olefins contained in a feedstock of more substituted external olefins and/or internal olefins, said liquid feedstock being substantially free of diolefins, in the presence of a palladium based catalyst and in the presence of hydrogen, the isomerisation conditions of the process corresponding to a temperature of between 20°C and 200°C, a pressure of between 1 and 50 bars, a VVH of between 0.5 and 10 h⁻¹ and an H₂/olefin molar ratio of between 0.01 and 1, characterised in that the catalyst is treated, before loading into the isomerisation reactor, with at least one sulphur-containing compound dissolved in a solvent and in which the catalyst containing 0.05 % to 10 % by weight of sulphur is loaded into the reactor and activated in a neutral or reducing atmosphere at a temperature of between 20°C and 300°C, a pressure of between 1 and 50 bars and a VVH of between 50 and 600 h⁻¹, and in that the feedstock is brought into contact with said activated catalyst under isomerisation conditions.

2. Process according to claim 1, characterised in that the feedstock is selected from the group formed by C₅, C₆ cuts from steam cracking, catalytic cracking and oligomerisation.

3. Process according to any one of the preceding claims, characterised in that the catalyst is constituted by palladium deposited on alumina.

4. Process according to any one of the preceding claims, characterised in that the sulphur-containing compound is selected from the group constituted by organic alkyl or aryl sulphides, organic alkylaryl or arylalkyl sulphides, thiols, thiodiazoles, organic thioacids, thioamides, thioesters, thiophenols, mercapto-alcohols, and monothioglycols.

5. Process according to any one of the preceding claims, characterised in that the solvent is selected from the group formed by petrols and hydrocarbon cuts.

6. Process according to any one of the preceding claims, characterised in that the solvent is selected from the group formed by alcohols, aldehydes, ketones, ethers, esters, polyalcohols, acids, polyacids and glycols.

7. Process according to any one of the preceding claims, characterised in that the solvent is water.

8. Process according to any one of the preceding claims, characterised in that activation is carried out between 60°C and 210°C, at a pressure of 3 to 20 bars and a VVH of 100 to 200 h⁻¹.

9. Process according to any one of the preceding claims, characterised in that isomerisation is carried out between 50°C and 150°C, at a pressure of 5 to 30 bars, a VVH of 1 to 6 h⁻¹ and an H₂/olefin molar ratio of 0.02 to 0.2.

10. Process according to any one of the preceding claims, characterised in that a sulphur-containing compound is also introduced into the feedstock.

11. Process according to any one of the preceding claims, characterised in that the catalyst contains 0.2 % to 1 % by weight of sulphur.

12. Process according to any one of the preceding claims, characterised in that the catalyst contains 0.02 % to 2 % by weight of palladium.

13. Process according to any one of the preceding claims, characterised in that the catalyst contains 0.05 % to 1 % by weight of palladium.

14. Process according to any one of the preceding claims, characterised in that the catalyst contains 0.05 % to 0.5 % by weight of palladium.
